(19) Europäisches Patentamt
European Patent Office
Office européen des brevets

(11) Veröffentlichungsnummer: **0 100 443**
**B1**

(12) # EUROPÄISCHE PATENTSCHRIFT

(45) Veröffentlichungstag der Patentschrift:
24.09.86

(51) Int. Cl.⁴: **C 08 F 212/08,** D 21 H 1/38 //
(C08F212/08, 220:04, 246:00)

(21) Anmeldenummer: 83106410.0

(22) Anmeldetag: 01.07.83

(54) **Copolymerisate aus 2 bis 3 C-Atomen enthaltenden monoolefinisch ungesättigten Carbonsäuren und Styrol und deren Verwendung zur Herstellung von wässrigen Papierlacken.**

(30) Priorität: 10.07.82 DE 3225875

(43) Veröffentlichungstag der Anmeldung:
15.02.84 Patentblatt 84/7

(45) Bekanntmachung des Hinweises auf die Patenterteilung:
24.09.86 Patentblatt 86/39

(84) Benannte Vertragsstaaten:
AT BE CH DE FR GB IT LI NL SE

(56) Entgegenhaltungen:
EP-A-0 047 889
DE-A-2 502 172

(73) Patentinhaber: BASF Aktiengesellschaft, Carl-Bosch- Strasse 38, D-6700 Ludwigshafen (DE)

(72) Erfinder: Hambrecht, Juergen, Dr., Werderstrasse 30, D-6900 Heidelberg (DE)
Erfinder: Muench, Volker, Dr., Luitpoldstrasse 114, D-6700 Ludwigshafen (DE)
Erfinder: Bankowsky, Heinz- Hilmar, Otto- Dill-Strasse 1c, D-6710 Frankenthal (DE)
Erfinder: Mueller, Dietrich- Wolfgang, Dr., Hasenhain 11, D-6901 Dossenheim (DE)
Erfinder: Wistuba, Eckehardt, Dr., Im Obergarten 7, D-6702 Bad Duerkheim (DE)

EP 0 100 443 B1

## Beschreibung

Copolymerisate aus Acryl- und/oder Methacrylsäure und Styrol, die Molekulargewichte von 700 bis 5000 haben und in wäßrigem Alkali löslich sind, sind beispielsweise aus der britischen Patentschrift 1 107 249 bekannt. In ihnen beträgt das Verhältnis von carboxylgruppenfreiem Monomer zu carboxylgruppen-enthaltendem Monomer 3:1 bis 1:1. Ihre alkalischen Lösung en können z.B. als Emulgiermittel, Verlaufsmittel und als Filmbildner eingesetzt werden. Ihre Molekulargewichte liegen vorzugsweise zwischen 1200 und 3600 und man stellt sie durch Lösungspolymerisation unter Zusatz von Polymerisationsinitiatoren her, wobei die Lösungsmittel als Regler dienen. Wenn die Copolymerisate, die Molekulargewichte von 1000 bis 3500 haben, bei Anstrichmitteln als Verlaufsmittel zugesetzt werden, erhält man Beschichtungen, die verbesserten Glanz, guten Verlauf und Wasserfestigkeit aufweisen.

Aus der belgischen Patentschrift 638 259 ist es bekannt, zum Beschichten von Papier und Karton wäßrige Dispersionen von Copolymerisaten des Vinylchlorids und/oder Vinylidenchlorids mit 5 bis 30 % ihres Gewichtes an Acryl und/oder Methacrylsäure einzusetzen. Diese Copolymerisate sind jedoch nicht wasserlöslich. Beim Beschichten von Papier mit derartigen Dispersionen treten jedoch leicht Verfärbungen auf und beim Einsatz von Filmbildehilfsmitteln <5% ist der Glanz schlecht. Weiterhin sind diese Dispersionen aufgrund von Unverträglichkeiten mit anderen Bindemitteln nicht zu kombinieren (Glanzverlust).

Schließlich ist es aus den DE-OSen 20 40 692, 25 02 172 und 25 48 393 bekannt, Copolymerisate der Acryl- und/oder Methacrylsäure mit Styrol und ggf. anderen Monomeren für die Oberflächemleimung von Papier einzusetzen. Dabei sollen jedoch die Copolymerisate der DE-OS 20 40 692 K-Werte von 30 bis 55 aufweisen, was Molekulargewichten von ca. 5000 bis ca. 40.000 emtspricht. Derartige Copolymerisate können in Suspension oder durch Fällungspolymerisation in Kohlenwasserstoffen hergestellt und unter Zusatz- von Alkalien in Wasser gelöst werden. Ihre wäßrig alkalischen Lösungen sind jedoch verhältnismäßig viskos und können praktisch nicht für Papierlacke eingesetzt werden. Bei den aus der DE-OS 25 48 393 bekannten Copolymerisaten, die ggf. Styrol und eine α, β-monoolefimisch ungesättigte Monocarbonsäure, wie Acrylsäure und/oder Methacrylsäure einpolymerisiert enthalten können, handelt es sich un Lösungspolymerisate, die bei 20 bis 120° C, z.B. in Alkoholen hergestellt sind. Durch Vermischen mit wäßrigen Ammoniak können die entsprechenden wäßrig alkoholischen Lösungen der Ammoniumsalze hergestellt werden. Die Copolymerisate können auch kontinuierlich durch Massepolymerisation bei Temperaturen zwischen 130 und 320° C unter Druck hergestellt sein und weisen K-Werte von 10 bis 80, insbesondere von 20 bis 45 auf, was Molekulargewichten von ca. 4000 bis ca. 30.000 entspricht. Die Copolymerisate dienen im allgemeinen als Pfropfgrundlage für die Herstellung von Papierleimungsmitteln.

Gegenstand der DE-OS 25 02 172 sind anionische Papierleimungsmittel mit Molekulargewichten von 600 bis 5000 aus ggf. Styrol und Acrylsäure und/oder Methacrylsäure sowie zusätzlich Maleinsäureanhydrid, Maleinsäure, Fumarsäure, Itakonsäure, Vinylphosphonsäure oder Vinylmilchsäure, die durch kontinuierliche Copolymerisation der Monomeren bei Temperaturen von 130 bis 320° C und Drücken ober 1 bar hergestellt sind. Sie enthalten bis 35 Gew.% Acrylsäure und/oder Methacrylsäure einpolymerisiert und werden in Abwesenheit von Reglern durch kontinuierliche Massepolymerisation hergestellt, wobei man vorzugsweise thermisch bei Temperaturen von 170 bis 250° C polymerisiert, doch können bei der Herstellung auch übliche radikalbildende Polymerisationskatalysatoren eingesetzt werden. Die dabei erhaltene Polymerisatschmelze kann mit wäßriger Ammoniaklösung oder mit gasförmigem Ammoniak oder einer anderen wäßrigen Lösung einer Base umgesetzt werden, z.B. mit Natronlauge, Kalilauge oder Aminen, wie Trimethylamin, Diethylamin oder Methylamim. Die neutralisierten Produkte ergeben Lösungen, die das Copolymerisat in einer Menge von 20 bis 40 Gew.% enthalten. Die Copolymerisate haben Molekulargewichte im Bereich von 600 bis 5000, vorzugsweise von 1000 bis 3000. Ihre Wasserlöslichkeit im alkalischen Bereich reicht häufig nicht für die Verwendung als Bindemittel in wäßrigen Papierlacken aus und sie sind gelb bis braun gefärbt. Außerdem können sie verhältnismäßig schlecht mit wäßrigen Polymer-Dispersionen verschnitten werden.

Aus der EP-A 0047889 sind zudem alkalilösliche Harze eines mittleren Molekulargewichts von 500 bis 5000 und mit Säurezahlen von 300 bis 500 bekannt, die durch Copolymerisation von 60 bis 40 Gew.% aromatisch substituierten Monoolefinen, wie Styrol, und 40 bis 60 Gew.% eines carboxylgruppenhaltigen Monomeren wie Acryl- und/oder Methacrylsäure, bei Temperaturen von 200 bis 400° C in Abwesenheit von radikalbildenden Initiatoren und Reglern hergestellt sind. Diese Harze werden jedoch zusammen mit Polymerdispersionen in Mengen von 0,2 bis 10 Gew.% zur Herstellung von Selbstglanzemulsionen für das Beschichten von insbesondere Fußböden eingesetzt.

Es wurde nun gefunden, daß Copolymerisate aus Acrylsäure und Styrol mit mittleren Molekulargewichten von 400 bis 4000 sich besonders gut zur Herstellung von wäßrigen Papierlacken eignen, wenn sie aus

　　a) 37 bis 45 Gew.% der umgesättigten Carbonsäuren,
　　b) 55 bis 63 Gew.% Styrol und
　　c) 0 bis 6 Gew.% anderen hydrophoben monoolefinisch ungesättigten Monomeren bei 200 bis 400° C durch kontinuierliche Massepolymerisation in Abwesenheit von Polymerisationsinitiatoren und Reglern hergestellt sind. Bei ihrem Einsatz als Bindemittel für Papierlacke erhält man lackierte Papiere mit guter Blockfestigkeit und besonders hohem Glanz. Auch sind die Beschichtungen, zu deren Herstellung hierfür übliche wäßrige Polymer-Dispersionen mitverwendet werden können siegelfähig.

Als weitere hydrophobe monoolefinisch ungesättigte Monomere kommen z.B. Methylacrylat, Methylmethacrylat, Isobornylacrylat, Dimethylmaleinat und Fumarsäurediethylester in Frage, doch ist mit der Mitverwendung derartiger Monomerer im allgemeinen kein Vorteil verbunden. Bei der Herstellung der Copolymerisate durch kontinuierliche Massepolymerisation werden im allgemeinen keine Lösungsmittel mitverwendet und die Verweilzeit der Monomeren in der Polymerisationsapparatur beträgt meist weniger als eine halbe Stunde. Unter diesen Bedingungen weisen die erhaltenen Copolymerisate einen Molekulargewichts-Uneinheitlichkeitsfaktor U =

$$\frac{Mw}{Mn}$$

- 1 < 2 auf, wobei Mw das durch Lichtstreuungsmessung bzw. Gelpermeationschromatographie bestimmte Gewichtsmittel des Molekulargewichts, Mn das dampfdruckosmometrisch bestimmte Zahlenmittel des Molekulargewichts bedeuten.

Als Polymerisationsapparatur kann z.B. ein Druckkessel, eine Druckkesselkaskade, ein Druckrohr oder auch ein Druckkessel mit nachgeschaltetem Reaktionsrohr, das mit einem statischen Mischer versehen ist, verwendet werden. Vorzugsweise polymerisiert man in mindestens zwei hintereinander geschalteten Polymerisationszonen. Dabei kann die eine Reaktionszone aus einem druckdichten Kessel, die andere aus einem druckdichten Reaktionsrohr, vorzugsweise einem beheizbaren statischen Mischer bestehen. Wenn man die Polymerisation in zwei hintereinander geschalteten Zonen durchführt, erhält man Umsätze, die über 99 % liegen. Während der Polymerisation muß für eine gute Durchmischung der Komponenten gesorgt werden, beispielsweise verwendet man druckdichte Kessel, die mit einem Rührer ausgestattet sind, oder Polymerisationsrohre mit statischen Mischern.

Ein Copolymerisat aus Styrol und Acrylsäure kann beispielsweise dadurch hergestellt werden, daß man die Monomeren einem rohrförmigen Reaktor oder zwei hintereinander geschalteten Polymerisationszonen, beispielsweise einer Druckkesselkaskade, kontinuierlich zuführt und nach einer Verweilzeit von 3 bis 30, vorzugsweise 5 bis 25 min bei Temperaturen zwischen 200 und 400° C das Reaktionsgemisch kontinuierlich aus der Reaktionszone ausschleußt. Die Einhaltung der Temperaturgrenzen ist wichtig, da bei Unterschreiten die Verweilzeiten zu lang und die Molekulargewichte zu hoch werden und bei Überschreitung thermische Zersetzungsprozesse eintreten können.

Bei der Polymerisation arbeitet man bei Drücken über 1 bar, vorzugsweise zwischen 1 und 200 bar. Besonders gute Ergebnisse erhält man, wenn man während der Polymerisatiom den Druck periodisch erhöht und vermindert, wobei Druckdifferenzen zwischen 5 und 120 bar vorteilhaft sind und man nach der Polymerisation mit Druckschwankungen entspannt. Durch diese Maßnahme wird eine pulsierende Strömung des Reaktionsgutes erreicht, wodurch eine Selbstreinigung des Reaktors unter Verbindungproduktschädigender Wandbeläge im Reaktor erzielt wird. Man erhält ein homogenes Produkt, das frei von Stippen ist.

Die Polymerisation wird vorzugsweise in Abwesenheit von Lösungsmitteln durchgeführt. Im allgemeinen reicht die bei der Polymerisation frei werdende Wärmemenge aus, um die für die Polymerisation erforderliche Temperatur aufrecht zu erhalten. Gelegentlich kann es jedoch erforderlich sein, die Reaktonszone zu heizen oder zu kühlen. In Abhängigkeit von der Polymerisationstemperatur und der Verweilzeit des Reaktionsgemisches im der Polymerisationszone erhält man Umsätze an Monomeren, die auch über 99,5 % betragen. Die Copolymerisate enthalten daher meist nur geringe Mengen nicht umgesetzter Monomerer, so daß es im allgemeinen nicht erforderlich ist, restliche Monomere aus dem Polymerisat abzutrennen. Zur völligen Vermeidung von Geruchsbelästigung kann es jedoch in manchen Fällen vorteilhaft sein, flüchtige Bestandteile aus dem Polymerisat durch Entgasung unter vermindertem Druck abzutrennen. Dies kann z.B. in Rohrverdampfern, Plattenverdampfern oder Filextrudern erfolgen.

Die Copolymerisate weisen vorzugsweise Molekulargewichte von 500 bis 2000 aus. Die hier angegebenen Molekulargewichte werden auf osmometrischem Weg mit Hilfe des Mechrolab Osmometers (5%-ige Lösung des Polymeren in Aceton) bestimmt. Das Molekulargewicht kann über die Polymerisationstemperatur sowie ggf. über Monomere (c) gesteuert werden.

Das Copolymerisat wird aus der Polymerisationsapparatur kontinuierlich, z.B. über ein Entspannungsgefäß mit nachgeschaltetem Austragsaggregat oder vorzugsweise pulsierend ausgetragen. Für viele Anwendungen ist es zweckmäßig, das Copolymerisat in teilweise neutralisierter, zumindest in gelöster Form einzusetzen. Die Carboxylgruppen des Copolymerisats werden daher im Anschluß an die Polymerisation im allgemeinen mit Basen zu 50 bis 100 % neutralisiert. Geeignete Basen sind z.B. gasförmiges Ammoniak, wäßrige Ammoniaklösung oder wäßrige Lösungen anderer Basen, wie Natronlauge, Kalilauge oder von Aminen, wie Monoalkylaminen, Dialkylaminen und Trialkylaminen mit 1 bis 3 C-Atomen in den Alkylresten. Auch Mischungen derartiger Amine oder von Aminen mit Ammoniaklösungen sind geeignet. Bei der Neutralisation wird in allgemeinen so gearbeitet, daß man Copolymerisat-Lösungen erhält, deren Feststoffgehalt zwischen 10 und 40 Gew.% liegt. Derartige Lösungen können durch Zugabe von Wasser ohne weiteres weiter verdünnt werden. Bei der Herstellung der Papierlacke können ggf. auch Alkonole mit 1 bis 4 C-Atomen zugesetzt werden, z.B. Methanol, Ethanol, Isopropanol und n-Butanol, wobei Isopropanol vorgezogen wird.

Bei einer bevorzugten Ausführungsform können die Copolymerisate direkt in Anschluß an die Copolymerisation kontinuierlich gelöst werden, indem man die ausgetragene heiße Schnelze bei Temperaturen von 80 bis 220°C und Drücken über 1 bar innerhalb von 5 bis 30 min, z.B. in Druckkesseln oder Druckrohren, die vorzugsweise mit Mischorganen, wie Stäben, Siebplatten oder Rührern ausgestattet sind, mit dem wäßrigen Alkali vermischt. Dabei werden vorzugsweise solche Mischorgane verwendet, die die Reaktionsmasse bei möglichst geringem Strömungswiderstand in verschiedene Ströme zerteilen und unter Veränderung der Strönungsrichtung dann wieder zusammenführen, wie dies in statischen Mischern der Fall ist. Dabei verwendet man im allgemeinen für das Lösen der Coopolymerisate Gefäße, deren Inhalt so bemessen ist, daß bei der vorgegebenen Verweilzeit von 5 bis 30 min die anfallende Menge an Copolymerisat, das ist meist 1 bis 50 kg Copolymerisat pro Liter und Stunde gelöst werden. Das neutralisierte, bzw. ggf. teilweise neutralisierte Copolymerisat wird vorzugsweise unter pulsierender Entspannung ausgetragen und der Druck beim Lösevorgang liegt vorzugsweise im Bereich von 5 bis 120 bar.

Die ganz oder teilweise neutralisierten wasserverdünnbaren Copolymerisate werden in Form ihrer 10 bis 50, vorzugsweise 20 bis 35 gew.%igen wäßrigen Lösungen für wäßrige Papierlacke eingesetzt. Vorzugsweise werden die dabei im Gemisch mit wäßrigen Polymerisat-Dispersionen eingesetzt, wobei das Abmischverhältnis (fest auf fest) von Wasser verdünnbarem Copolymerisat zu Polymerdispersionen, im allgemeinen 20:80 bis 80:20, vorzugsweise 25:75 bis 60:40, beträgt. Beim Vermischen mit den Polymerisat-Dispersionen ist die Reihenfolge der Zugabe ohne Bedeutung. Außerdem können zu den wäßrigen Papierlacken andere übliche Zusätze, wie Entschäumungsmittel, Wachse und ggf. Koaleszenzmittel in den üblichen Mengen zugesetzt werden. Man kann dabei die üblichen Rühr- und Mischaggregate, z.B. Dissolver, einsetzen. Als Polymerisat-Dispersionen kommen insbesondere solche in Betracht, die eine Mindestfilmbildetemperatur von 10 bis 95°C aufweisen. Die Copolymerisate können sich dabei von monolefinisch ungesättigten Carbonsäureestern, z.B. von Acryl- oder Methacrylsäureestern sowie Vinylestern und vinylaromatischen Verbindungen, wie besonders Styrol sowie vom Vinyl- oder Vinylidenhalogeniden, wie besonders Vinylchlorid und/oder Vinylidenchlorid sowie zusätzlich von Acrylnitril ableiten. Als monoolefinisch ungesättigte Carbonsäureester kommen z.B. Methylmethacrylat, Acrylsäure-tert.-butylester, Methacrylsäure-n-butylester, Acrylsäure-n-butylester, Methacrylsäurecyclohexylester und Isobornylacrylat in Betracht. Von besonderen Interesse sind wäßrige Dispersionen von Styrol-Acrylsäureestercopolymerisaten mit einer Mindestfilmbildetenperatur von 40 bis 95°C, die als Acrylester, Acrylsäure-tert.-butylester, Methacrylsäure-n-butylester und Methacrylsäuremethylester sowie zusätzlich ggf. bis zu 2 Gew.%, bezogen auf das Copolymerisat $\alpha$, $\beta$-monoolefinisch ungesättigte 3 bis 5 C-Atome enthaltende Carbonsäuren, wie Acrylsäure oder Methacrylsäure und/oder deren Amide, wie besonders Acrylsäureamid einpolymerisiert enthalten. Derartige wäßrige Polymerisat-Dispersionen sind im Handel erhältlich und werden zum Teil für sich als Papierlacke eingesetzt.

Die wäßrigen Papierlacke, die vorzugsweise Polymer-Dispersionen der genannten Art enthalten, können in an sich üblicher Weise, z.B. durch Spritzen, Walzen, Streichen, Bakeln oder Gießen auf bedrucktes oder auch unbedrucktes Papier, Pappe oder Folie aufgebracht werden. Die Trocknung der lackierten flächigen Gebilde erfolgt neist bei Temperaturen zwischen 60 und 130°C, insbesondere bei Temperaturen von 80 bis 120°C. Man erhält mit den neuen Papierlacken Oberflächenbeschichtungen des ggf. bedruckten Papiers, wie sich durch besonderen Glanz, besonders große Blockfestigkeit und Naßwischfestigkeit auszeichnen und die wegen ihrer Lösungsmittelfreiheit geruchsneutral und umweltfreundlich sind. Die Beschichtungen haften außerdem hervorragend auf Papieren, Pappen oder Folien.

Die in den folgenden Beispielen genannten Teile und Prozente beziehen sich auf das Gewicht. Die darin angegebenen mittleren Molekulargewichte Mn wurden osmonetrisch nit Hilfe des Mechrolab Osmometers bestimmt. Die Bestimmung der in den Beispielen angegebenen Molekulargewichtuneinheitlichkeiten wurde das Gewichtsmittel von Mw mit der Gelpermeationschromatographie bestimmt.

**Beispiel 1**

a) Herstellung des wasserlöslichen Copolymerisats:
60 Teile Styrol und 40 Teile Acrylsäure wurden in einen 1-1-Druckkessel mit nachgeschalteten Druckrohr doppelten Rauminhalts mit Druckregler kontinuierlich zudosiert. Die Apparatur wurde auf 310° C erhitzt und unter Druck (5 bis 50 bar) gehalten. Dabei wurde der Druck periodisch in Abständen von jeweils einer Minute abgesenkt und wieder auf den Ausgangswert erhöht. Die Verweilzeit des Reaktionsgemisches in der Apparatur beträgt 11 min. Am Ende der Apparatur wird die Copolymerisat-Schmelze ausgetragen und in wäßriger Ammoniaklösung (Konzentration 20 Gew.%) bei einem Druck von 1 bar innerhalb von 30 min unter Rühren gelöst. Das erhaltene Copolymerisat hat ein mittleres Molekulargewicht Mn von 650 und eine Molekulargewichtuneinheitlichkeit $U = \dfrac{Mw}{Mn}$ -

1 von 1,5. Die wäßrige Lösung kann für sich als Papierlack eingesetzt werden.

b) Herstellung eines Papierlacks

42 Teile einer Lösung von 25 Teilen des nach a) hergestellten Copolymerisats in einem Gemisch von 12 Teilen konzentriertem Ammoniak in 63 Teilen Wasser und 52 Teile einer wäßrigen Dispersion eines Copolymerisats aus 85 Teilen Styrol und 15 Teilen tert. Eutylacrylat einer MPT von etwa 90° C, 3 Teilen einer wäßrigen 35%igen Polyethylenwachs-Sekundärdispersion Tropfpunkt des Festkörpers (DGG-M-III-3 ca. 130° C) und 3 Teilen Butylglykol werden gemischt. Man erhält einen wäßrigen Papierlack, dessen Feststoffgehalt 33 % beträgt. Er hat in einem DIN-Becher (4 mm-Düse) und 24 Stunden Lagerung bei 23°C eine Auslaufzeit von 14 s und verändert bei 14-tägiger Lagerung bei 50°C seine Viskosität praktisch nicht.

Der Papierlack wird mit Hilfe einer I5µ-Spiralrakel auf Papier folgender Eigenschaften (einseitig gestrichenen, halbseitig bedruckt, Papier (80 g/m²) in einer Menge von 3 g je m² aufgetragen und dann bei einer Temperatur von 70° C 3 Minuten getrocknet, wobei Verfilmung erfolgt. Man erhält ein lackiertes Papier eines Glanzés nach DIN 67530 (gemessen mit Multigloss-Gerät, Meßwinkel 80°C) der einen Reflektometer-Wert von 76 % entspricht. Die Blockfestigkeit gemessen durch Aufeinanderlegen zweier 3 x 3 cm-Proben mit der Lackschicht und 16 Stunden erwärmen auf 80° C bei einer Belastung von 1000 g/cm² beträgt nach der Wertungsskala gemäß DIN 53 53 230 Note 0. Schließlich ist das lackierte Papier heißsiegelbeständig gegen Verpackungsfolie: Zur Prüfung dieser Eigenschaft wird ein Polienstreifen aus Zellglas MS (Kalle) mit einem geheizten Bügel des Pornats 1 x 4 cm 1 s mit einer Temperatur von 150°C bei einer Belastung von 4 kg/cm² auf die lackierte Papieroberfläche gepreßt unter Verwendung des Heißsiegelgeräts HSG/ET der Pa. Brugger, München. Hierbei erfolgt kein Verkleben. Außerdem verändert sich der Glanz des Lacks auch bei Lagerung bei erhöhter Temperatur praktisch nicht.

c) Herstellung eines weiteren Papierlacks

In 92 Teilen einer Lösung von 25 Teilen des nach a) hergestellten Copolymerisats in einem Gemisch von 12 Teilen konzentrierten Ammoniak mit 63 Teilen Wasser gibt man 3 Teile einer wäßrigen Polyethylenwachs-Sekundärdispersion (wie unter b) angegeben) und 5 Teile Butylglykol. Der Feststoffgehalt des erhaltenen Papierlacks beträgt 24 %. Seine Auslaufzeiten, Glanz und Blockwerte sind in der Tabelle am Ende der Beispiele unter 1 (c) angegeben.

**Vergleichsbeispiel**

Gemäß Beispiel 1 der GB-PS 1 107 249 wird ein Styrol-Acrylsäureharz, das 26,76 Gew.% Acrylsäure einpolymerisiert enthält, hergestellt. Es hat das mittlere Molekulargewicht 1900. Die Molekularuneinheitlichkeit beträgt $U = \dfrac{Mw}{Mn}$ -1 > 2.

Mit dem Vergleichsharz wird gemäß den Angaben unter 1 b) ein Papierlack hergestellt und ein Papier beschichtet. Dabei ergibt sich ein Glanz nach DIN 67 530 von 76 %, eine Blockfestigkeit gemäß DIN 23 230 der Note 0-1 und keine befriedigende Heißsiegelbeständigkeit, d.h. das lackierte Papier verklebt bei der Prüfung mit der Zellglasfolie. Weitere Werte für Auslaufzeiten und Glanz sind in der am Ende der Beispiele angebrachten Tabelle angegeben.

**Beispiel 2**

62 Teile Styrol und 38 Teile Acrylsäure wurden gemäß Beispiel 1a) copolymerisiert. Die Temperatur betrug 290° C, die Verweilzeit 15 Minuten und der Druck zwischen 5 und 60 bar.

Das erhaltene Copolymerisat hat ein mittleres Molgewicht Mn von 870 und eine Molekulargewichtsuneinheitlichkeit von $U = \dfrac{Mw}{Mn}$ - 1 = 1,8.

**Beispiel 3**

50,0 Teile Styrol, 44 Teile Acrylsäure und 6 Teile Methylacrylat wurden gemäß Beispiel 1a copolymerisiert. Die Temperatur betrug 300° C, der Druck 10 bis 80 bar und die Verweilzeit 9 Minuten.

Das erhaltene Copolynerisat hat ein nittleres Molgewicht Mn von 620 und eine Molekulargewichtsuneinheitlichkeit von $U = \dfrac{Mw}{Mn}$ - 1 = 2,0.

Die Werte für Auslaufzeiten von Lacken, die aus den Styrol-Copolymerisaten der Beispiele 2 - 4 entsprechend den Angaben in Beispiel 1 (b) hergestellt und geprüft sind, sind zusammen mit den Glanz- und Blockwerten in der folgenden Tabelle zusammengestellt:

## Tabelle

| | Beispiel | 1b | 1c | 2 | 3 | Vergleich |
|---|---|---|---|---|---|---|
| Auslaufzeit DIN 4 Becher 23°C [see] | | | | | | |
| a) nach 24 Std. Lagerung bei 23°C | | 14 | 17 | 16 | 20 | 15 |
| b) nach 7tägiger Lagerung bei 50°C | | 15 | 17 | 17 | 19 | 38 |
| c) nach 14tägiger Lagerung bei 50°C | | 16 | 16 | 17 | 22 | nicht meßbar |
| Trocknungstemperatur (°C) | | 70 | 70 | 70 | 70 | 70 |
| Glanz 60° (%) | | | | | | |
| a) nach 24 Std Lagerung des Lacks bei 23°C | | 76 | 78 | 77 | 68 | 76 |
| b) nach 7tägiger Lagerung des Lacks bei 50°C | | 70 | 80 | 78 | 80 | 66 |
| c) nach 14tägiger Lagerung des Lacks bei 50°C | | 72 | 83 | 80 | 67 | 54 |
| Blockwert | | 0 | 0 | 0 | 0 | 0—1 |

## Patentanspruch

Verwendung von Copolymerisaten, die aus
a) 37 bis 45 Gew.% Acrylsäure
b) 55 bis 63 Gew.% Styrol und
c) 0 bis 6 Gew.% anderen hydrophoben
monoolefinisch ungesättigten Monomeren
bei 200 bis 400°C durch kontinuierliche
Massepolymerisation in Abwesenheit von
Polymerisationsinitiatoren und Reglern
hergestellt sind und mittlere Molekulargewichte
von 400 bis 4000 haben, zur Herstellung von
wäßrigen Papierlacken.

## Claim

The use of copolymers which have been
prepared from
(a) 37 to 45% by weight of arylic acid,
(b) 55 to 63% by weight of styrene, and
(c) 0 to 6% by weight of other hydrophobic,
monoolefinically unsaturated monomers
at 200 to 400°C by continuous bulk
polymerization in the absence of polymerization
initiators and modifiers, and have a mean
molecular weight of from 400 to 4000, for the
production of aqueous paper lacquers.

## Revendication

Utilisation de copolymères préparés à partir de
a) 37 à 45 % en poids d'acide acrylique
b) 55 à 63 % en poids de styrène et
c) 0 à 6 % en poids d'autres monomères à
insaturation mono-oléfinique hydrophobes par
une polymérisation dans la masse continue entre
200 et 400°C en l'absence d'amorceurs de la
polymérisation et de substances régulatrices et
possédant des poids molécularies moyens
compris entre 400 et 4 000 pour la préparation de
compositions aqueuses pour l'enduction de
papiers.